## Europäisches Patentamt
## European Patent Office
## Office européen des brevets

(19)

(11) Publication number: **0 014 055**
**B1**

(12)

# EUROPEAN PATENT SPECIFICATION

(45) Date of publication of patent specification: **14.09.83**

(51) Int. Cl.³: **C 04 B 33/36, C 04 B 43/02**

(21) Application number: **80300111.4**

(22) Date of filing: **11.01.80**

(54) Fibrous refractory products.

(30) Priority: **17.01.79 US 4103**

(43) Date of publication of application:
**06.08.80 Bulletin 80/16**

(45) Publication of the grant of the patent:
**14.09.83 Bulletin 83/37**

(84) Designated Contracting States:
**DE FR GB IT**

(56) References cited:
**EP - A - 0 006 362**
**AT - B - 315 057**
**GB - A - 1 328 493**
**US - A - 3 269 849**
**US - A - 3 371 134**
**US - A - 4 118 236**
**US - A - 4 126 474**

(73) Proprietor: THE BABCOCK & WILCOX COMPANY
1010 Common Street P.O. Box 60035
New Orleans Louisiana 70160 (US)

(72) Inventor: Johnson, Thomas A.
208 Buckingham Drive
Lynchburg, Virginia 24502 (US)
Inventor: Long, William G.
1407 Brookville Lane
Lynchburg, Virginia 24502 (US)

(74) Representative: Cotter, Ivan John et al,
D. YOUNG & CO. 10 Staple Inn
London WC1V 7RD (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Fibrous refractory products

This invention relates to fibrous refractory products.

In the handling of molten aluminium and its alloys, it is highly desirable to utilise refractory products per se, or refractory lined parts having low thermal conductivity, which are chemically inert to the molten metal. These products, for example, may take the form of pressed boards used for baffles or the lining launder systems, or tubular members through which the molten metal may be poured during a transfer process.

The machineability of these products is important as machining in the aluminium industry is generally accomplished using standard wood working machines and techniques. Since a wide variety of shapes are utilised, it is more economical to machine parts than to order sixed components. Typical applications may require cutting, drilling, tapping, trepanning, thread grinding or milling, sanding, the use of forming tools such as lathes to form curved surfaces or those of stepped, angular or irregular shape, or techniques which otherwise produce an edge which must be retained in service. For example, a continuous thread may be turned on a tubular member.

Materials have been used in the past which also possessed other desirable properties for success in molten aluminium application such as dimensional stability, spall resistance, and resistance to thermal and mechanical shock. Fibrous refractories, such as are disclosed in US Patents Nos. 3 269 849 and 3 294 562, are known to have particular utility in this regard. However, such refractories contain predominant amounts of asbestos fibres, and asbestos has now been linked to as a cause of at least three major diseases—asbestosis, lung cancer and mesothelioma. Due to the fact that many aluminium shops have become accustomed to working with wood working machines and techniques which may generate atmospheric contaminants, it has become highly undesirable to utilise refractories having asbestos fibres. Many fibrous refractory compositions, however, cannot be used in lieu of asbestos fibre systems since, in application, the fibres or the composition would either disintegrate or have insufficient heat resistance, or otherwise not exhibit the desired properties described above with respect to molten aluminium exposure.

Thus, there exists a need for a suitable substitute for the asbestos refractory products which is amenable to the machining operations described while having characteristic properties similar to those of the previously used asbestos fibrous refractories.

US Patent No. 4 118 236 discloses an asbestos-free fibrous refractory product which is formed by mixing a composition comprising no more than 30% of fibre (e.g. ceramic fibre) and clay (some of which may be kaolinitic), adding water, shaping the mix to form an article, drying the article, and then firing the article at a temperature that will transform the clay into the amorphous metakaolin phase.

According to the present invention there is provided an asbestos-free fibrous refractory product which is formed by mixing a composition comprising alumino-silicate fibre and kaolin clay, adding water, shaping the mix to form an article, drying the article and then firing the article at a temperature that will transform the clay into the amorphous metakaolin phase, characterised in that the composition consists essentially of 30 to 80% weight percent of the alumino-silicate fibre and 20 to 70% weight percent of the kaolin clay, wherein part of the kaolin clay may optionally be replaced by ball clay and wherein the weight percents are based on the total weight of the composition prior to the addition of water, the article being machined prior to firing, and the product being substantially chemically inert to molten aluminium and its alloys.

By virtue of the proportions of the alumino-silicate fibre and kaolin clay set forth above, products embodying the present invention have been found to have the features of being amenable to the machining operations generally described above and of being substantially chemically inert to molten aluminium and its alloys. The products in fact possess advantageous properties similar to asbestos-containing products traditionally used in the handling of molten aluminium, and yet do not contain asbestos. The alumino-silicate fibre and kaolin clay composition ensures excellent compatibility of the products at elevated temperatures.

In manufacturing preferred products embodying the invention, a composition consisting essentially of an alumino-silicate ceramic fibre, kaolin clay, plasticisers, water and lubricants is pressed or extruded into a desired shape and dried to remove the mechanical water. In the dried unfired state, the product is fired at elevated temperature to drive off chemical water and transform the clay into the metakaolin phase.

For a better understanding of the invention, reference should be made to the following description, given by way of illustrative and nonlimiting example, of preferred embodiments of the invention.

In accordance with the invention there is provided an alumino-silicate product, consisting essentially of alumino-silicate ceramic fibre and kaolin clay.

A suitable alumino-silicate ceramic fibre is produced under the trademark 'Kaowool' in lengths up to 10 cm (four inches). Kaowool ceramic fibre typically has a melting point of 2033 K (3200°F), an average fibre diameter of 2.8 microns, specific gravity of 2.56, specific heat at 1255 K (1800°F) mean of 1067.6 J/kg K (0.255 Btu/lb/F), fibre tensile strength of 1310 MPa (1.9×10⁵ lbs/in²) and fibre tensile modulus of 116 GPa (16.8×10⁶ lb/in²). Kaowool ceramic fibre has low thermal conductivity, low heat capacity, and is extremely resistant to thermal shock.

The alumino-silicate fibre and kaolin clay, such as 'Albion' (trademark) kaolin clay, is dry mixed in a muller-type mixer for a period of several minutes. Additives or lubricants or both, to provide workability to aid in forming the composition into the desired forms (such as pressed board or extruded shapes) are then added. Finally, water is added until a desired consistency is achieved, since the fibre tends to reduce plasticity. In the preferred embodiments, bentonite or ball clay is added to the composition to impart plasticity and act as a binder. The composition is mixed for a period in the order of one hour to form a plastic mix which is shaped by extruding or pressing. Plasticity may be increased by de-airing.

Several types of lubricants or additives have been successfully utilised, including a ligno-sulphate lubricant binder marketed as 'Marisperse 43' by the American Can Co.; a wax water emulsion by the Mobil Oil Co. known as 'Mobilcer C'® an ammonium salt of alginic acid from the Kelco Co. marketed under the trademark 'Superloid'; and an alumina binder in the form of a fine powder of alumina hydrate marked under the trademark 'Dispal' by Philadelphia Quartz Co. The Dispal alumina binder provides some binding properties upon drying.

After shaping, the shaped product is dried to remove mechanical water (water in a mix that is absorbed onto the particles, absorbed into the pores of a material, held in by capillary action; generally, water that is not chemically bonded to any of the material). The dried unfired product may then be machined using standard wood working tools and procedures. Once machined, the refractory is fired to an elevated temperature to drive off the lubricants and the chemical water (water held in chemical bond, known also as 'water of crystallinity') and transform the clay into the metakaolin phase. The metakaolin phase is initiated at approximately 700 K (800°F), when the chemical water in the kaolinite crystal is driven off leaving an amorphous material known as metakaolin. At approximately 1255 K (1800°F), this material abruptly decomposes and subsequently forms alumina, mullite and free silica. The metakaolin phase of kaolin has been determined to be particularly resistant to wetting and reaction by molten aluminium. The firing produces a strong, stable part, which has been judged to have comparable mechanical properties to fibrous refractories previously used in the aluminium industry.

Compositions with additives which were intended to reduce the wetting of the refractory products by aluminium are shown in Table I. These compositions were mixed, extruded, and then pressed into 7.5 cm (3 inch) by 10 cm (4 inch) boards approximately 1.25 cm (1/2 inch) thick. The boards were dried overnight at 366.5 K (200°F). Holes were drilled in the boards for the purpose of securing the boards as samples to the walls of a launder trough for molten aluminium. The boards were fired to 822 K (1200°F) and exposed to molten aluminium. The specimens made from mix numbers 2, 3 and 4 displayed almost no interaction between the specimens and the aluminium. The specimen of mix 4 cracked, but this was deemed due to the procedure used to press the board.

The invention may be more clearly understood by reference to the following examples.

Example I

In this example 3000 grams of chopped Kaowool ® ceramic fibre, 1620 grams of kaolin clay, 645 grams of bentonite clay, 3.6 grams of sodium silicate, 300 grams of kyanite ≤75 mm (−200 M/F) and 3600 ml of water were blended and extruded into a tube measuring 69.9 mm (2-3/4 inches) outside diameter and 44.4 mm (1-3/4 inches) internal diameter. The tube was air dried at 366.5 K (200°F). A 152.4 mm (six inch) section of the tube was then placed in an alumina crucible with a piece of aluminium (6061 alloy). The crucible was placed in a furnace and heated to 1089 K (1500°F) for 150 hours. At this temperature the aluminium became molten. Approximately 5 cm (two inches) of the tube was exposed to the molten metal. No dimensional changes were observed in the tube following the test. There was very little wetting by the aluminium. Only a very slight reaction was observed at the aluminium to tube interface after the tube was sectioned and metal removed.

Example II

Compositions, as shown in Table II, were examined to determine properties such as relative linear shrinkage, density and modulus of rupture. Additives such as Marisperse 43 and Mobilcer C were provided to promote workability as the fibre tends to reduce plasticity. All of the compositions extruded well. Shrinkage values were obtained on extruded round bars, with measurements taken over a 152.4 mm (six inch) span. Boards 12.7 mm (half inch) in thickness were pressed from composition 2 and dried overnight at 366.5 K (200°F). A 50.8 mm (two inch) by 201.6 mm (eight inch) section of this board was exposed to molten aluminium in a laundering trough for five days. Very little chemical attack was observed on the specimen at the end of the test.

An alumino-silicate fibrous refractory composition which has been found to give a most satisfactory product contains the following approximate percentages by weight:

|                                 | Percent |
| ------------------------------- | ------- |
| Alumino-silicate fibre          | 42.7    |
| Kaolin clay                     | 21.4    |
| Bentonite clay                  | 10.7    |
| Marisperse 43 (50% solution)    | 6.1     |
| Mobilcer C                      | 0.776   |
| H$_2$O (1/2% Superloid)         | 8.5     |

The organics and bentonite are plasticisers and are needed to obtain properties required by the forming process used.

The machinability of products formed from compositions as set forth above has been demonstrated, for example, by taking a cylindrical tube dried at 366.5 K (200°F) and turning a continuous thread on one end of the tube while the opposite end is tapered on a lathe. Samples of board formed from the composition have been evaluated for machinability by aluminium producers and the machinability thereof rated as excellent.

The composition of products embodying the invention preferably comprises alumino silicate ceramic fibre in the range of 48 to 60 weight percent, kaolin clay in the range of 22 to 40 weight percent and bentonite or ball clay in the range of 8 to 22 weight percent. The amount of the fibre should not exceed 80 weight percent in order to preclude processing difficulties and strength problems. Fibre levels below 30 weight percent would not have much advantage over clay compositions in that they would be very dense and would not be resistant to thermal shock. For similar reasons, the limits of clay are 20 weight percent minimum and 70 weight percent maximum.

## TABLE I
### Compositions displaying molten aluminium resistance

| Mix composition, Weight % | 1     | 2     | 3     | 4     |
| ------------------------- | ----- | ----- | ----- | ----- |
| Alumino-silicate fibre    | 42.86 | 41.13 | 40.10 | 43.61 |
| Kaolin clay               | 34.29 | 30.85 | 32.09 | 34.88 |
| Jackson ball clay         | 8.57  | 12.85 | 8.02  | 8.72  |
| Marisperse 43             | 5.71  | 5.14  | 5.35  | —     |
| Mobilcer C                | 8.57  | 77.71 | 8.02  | —     |
| Chrome-phosphate binder   | —     | 2.32  | 6.42  | —     |
| Alumina hydrate binder    | —     | —     | —     | 11.63 |
| Nitric acid               | —     | —     | —     | 1.16  |
| Total                     | 100   | 100   | 100   | 100   |
| Water, weight %           | 21.43 | 24.16 | 20.05 | 37.79 |

## TABLE II
### Representative compositions and properties

| Mix composition, weight% | 1 | 2 | 3 |
| --- | --- | --- | --- |
| Alumino-silicate fibre | 52.91 | 50.97 | 54.06 |
| Kaolin clay | 28.22 | 27.18 | 9.00 |
| Bentonite or ball clay | 14.11 | 13.59 | 32.43 ball clay |
| Marisperse 43 | 3.81 | 7.34 | 4.51 |
| Mobilcer C | 0.95 | 0.92 | — |
| Total | 100 | 100 | 100 |
| Water, weight % | 22.93 | 18.9 | 36.03 |
| Shrinkage, % | | | |
| 366.5 K (200°F), 16 hours | 2.8—3.6 | 3.5 | 1.6—2.2 |
| 1089 K (1500°F), 4 hours | 3.2—4.0 | — | 2.4—3.0 |
| Density, kg/m³ (lb/ft³) | | | |
| Extruded | 1922.2—1954.2 (120—122) | — | 1553.8—1617.9 (97—101) |
| Dry | 1681.9—1746.0 (105—109) | 1714.0 (107) | — |
| Fired at 1089 K (1500°F) for 4 hours | 1601.8—1633.9 (100—102) | — | 1489.7—1505.7 (93—94) |
| Modulus of rupture, MPa (lb/in²) Dry | 9.170—10.204 (1330—1480) | — | — |
| Fired at 1089 K (1500°F) for 4 hours | 6.950—7.963 (1008—1155) | — | 6.164—7.239 (894—1050) |

## Claims

1. An asbestos-free fibrous refractory product which is formed by mixing a composition comprising alumino-silicate fibre and kaolin clay, adding water, shaping the mix to form an article, drying the article and then firing the article at a temperature that will transform the clay into the amorphous metakaolin phase, characterised in that the composition consists essentially of 30 to 80% weight percent of the alumino-silicate fibre and 20 to 70% weight percent of the kaolin clay, wherein part of the kaolin clay may optionally be replaced by ball clay and wherein the weight percents are based on the total weight of the composition prior to the addition of water; the article being machined prior to firing, and the product being substantially chemically inert to molten aluminium and its alloys.

2. A product according to claim 1, wherein the composition consists essentially of 48 to 60 weight, percent of the alumino-silicate fibre, 22 to 40 weight percent of the kaolin clay, and 8 to 22 weight percent of ball clay.

## Patentansprüche

1. Asbestfreies feuerfestes Faserprodukt, das durch Mischen einer Zusammensetzung aus Aluminosilikatfasern und Kaolinton, Zugabe von Wasser, Formen des Gemisches zu einem Gegenstand, Trocknen des Gegenstandes und anschließendes Brennen des Gegenstandes bei einer Temperatur, die den Ton in die amorphe Metakaolinphase unwandelt, gebildet wurde, dadurch gekennzeichnet, daß die Zusammensetzung im wesentlichen aus 30 bis 80 Gewichts-% der Aluminosilikatfasern und 20 bis 70 Gewichts-% des Kaolintones besteht, worin ein Teil des Kaolintones gegebenenfalls durch Töpferton ersetzt sein kann und worin die Gewichtsprozentsätze auf das Gesamtgewicht der Zusammensetzung vor der Wasserzugabe bezogen sind, der Gegenstand vor dem Brennen maschinell bearbeitet wird und das Produkt im wesentlichen chemisch inert gegen geschmolzenes Aluminium und seine Legierungen ist.

2. Produkt nach Anspruch 1, wobei die Zusammensetzung im wesentlichen aus 48 bis 60 Gewichts-% der Aluminosilikatfasern, 22 bis 40 Gewichts-% des Kaolintones und 8 bis 22 Gewichts-% Töpferton besteht.

## Revendications

1. Produit réfractaire fibreux exempt d'amiante formé par malaxage d'une composition comportant de la fibre d'aluminosilicate et de l'argile du type kaolin, addition d'eau, façonnage du mélange pour former un article, séchage de l'article puis cuisson de l'article à une température qui transforme l'argile en la phase métakaolin amorphe, caractérisé en ce que la composition est essentiellement composée de 30 à 80% en poids de la fibre d'aluminosilicate et de 20 à 70% en poids de l'argile du type kaolin, une partie de l'argile de type kaolin pouvant être facultativement remplacée par de l'argile figuline et les pourcentages en poids étant rapportés au poids total de la composition avant l'addition d'eau, l'article étant usiné avant cuisson et le produit étant sensiblement chiminiquement inert vis-à-vis de l'aluminium et de ses alliages en fusion.

2. Produit selon la revendication 1, caractérisé en ce que la composition est essentiellement composée de 48 à 60% en poids de la fibre d'aluminosilicate, de 22 à 40% en poids de l'argile du type kaolin, et de 8 à 22% en poids d'argile figuline.